Europäisches Patentamt

European Patent Office

Office européen des brevets

(19)

(11) Publication number: **0 061 571**

**B1**

(12) **EUROPEAN PATENT SPECIFICATION**

(45) Date of publication of patent specification: **19.06.85**

(21) Application number: **82100970.1**

(22) Date of filing: **10.02.82**

(51) Int. Cl.⁴: **G 06 F 15/20**

(54) **Word processing system with a printer shared by a plurality of display units.**

(30) Priority: **26.03.81 US 247969**

(43) Date of publication of application:
**06.10.82 Bulletin 82/40**

(45) Publication of the grant of the patent:
**19.06.85 Bulletin 85/25**

(84) Designated Contracting States:
**DE FR GB IT**

(56) References cited:
**US-A-3 950 731**
**US-A-4 161 777**

**COMPUTER DESIGN, vol. 13, no. 3, March
1974, pages 81-86, Concord (USA);
SIEMENS FORSCHUNGS- & ENTWICKLUNGS-
BERICHTE, vol. 7, no. 6, 1978, pages 322-324,
Berlin (DE);
IBM TECHNICAL DISCLOSURE BULLETIN, vol.
22, no. 10, March 1980, pages 4586-4590, New
York (USA);**

(73) Proprietor: **International Business Machines
Corporation
Old Orchard Road
Armonk, N.Y. 10504 (US)**

(72) Inventor: **Barnes, Johnny Gennie
11001 Bitteroot Circle
Austin Texas 78750 (US)**
Inventor: **Hooten, John Andrew
2 Longhorn Drive
Round Rock Texas 78664 (US)**
Inventor: **Hurley, Patrick James
4802 Parkview
Austin Texas 78731 (US)**
Inventor: **Miller, Ernest Lee
402 Ridge Oak
Georgetown Texas 78626 (US)**

(74) Representative: **Bonneau, Gérard
Compagnie IBM France Département de
Propriété Industrielle
F-06610 La Gaude (FR)**

Courier Press, Leamington Spa, England.

# Description

This invention relates to word processing systems, and more particularly, relates to a word processing system wherein a single printer is shared by a plurality of display units.

In the past decade word processing systems have rapidly assumed a position of great importance in the business equipment field. At the present stage, at a little more than the cost of a group of high quality typewriters, most business organizations can purchase a wood processing system wherein the material to be produced is formatted on one or more display units each of which has a text formatting microprocessor, means such as a CRT for displaying the text and means for controlling a printer to print the finalized formatted text. Word processing systems strive for higher quality printed text produced more rapidly and efficiently than traditional means for producing printed text copy. The field is a highly competitive one with a great many companies marketing high quality efficient equipment. Because of the highly competitive nature of the field, cost reduction without sacrifice in quality has been a major goal in the field. Some typical word processing systems are described in U.S. patents 4,137,564, 4,126,893 and 4,138,719.

Since about 65—95 percent of the time in producing a final hard copy is spent by the operater on the display unit in formatting the next to be involved in the hard copy and only 5—35 percent of the time spent in actual printing, the present invention is directed to a word processing system whereby a plurality of display units are multiplexed, i.e., share a single printer.

US patent 3,950,731 describes a system in which a printer is multiplexed with a plurality of data sources. However, the patent does not disclose the way of utilizing one of the data sources as a primary unit through which all other data sources pass data in order to communicate with the printer.

The present invention provides a word processing system wherein there is no separate multiplexing unit. Rather, any one of the display units in a plurality of display units has the capability of acting as the primary display unit through which remaining display units are multiplexed and communicate with the printer. In this manner, multiplexing capability need not be predetermined at the maufacturing stage, rather, in the field and during operation, decisions may be made to designate any one of the display units as the primary display unit and having the remaining units multiplexed through this primary display unit communicating with and controlling the printer.

The present word processing system comprises a printer and a plurality of display units having each a text formatting processor. Each display unit comprises means for detecting whether the printer is directly connected to it and to cause same to operate as a primary display unit in the presence of a direct printer connection and as a secondary display unit in the absence thereof, first connecting means being associated with the display unit operating as primary display unit for directly connecting same to the printer. Each display unit further comprises control means for controlling the sharing of the printer, these control means being normally inactive but being activated when the display unit is the primary display unit and is connected to one or more secondary display units, sharing connecting means being provided for connecting the primary display unit to the secondary display units.

Referring now to the drawings, wherein a preferred embodiment of the claimed invention is illustrated, and wherein like reference numerals are used throughout to designate like parts;

Figs. 1 and 2 show a continuous diagrammatic representation of the logic of the present system.

Fig. 3 is a flow chart of the process by which each display unit work station determines whether it is a primary or secondary work station.

Fig. 4 is a flow chart of a typical process illustrating how the primary work station controls and allocates queuing and carrying out of jobs by a combination of work stations.

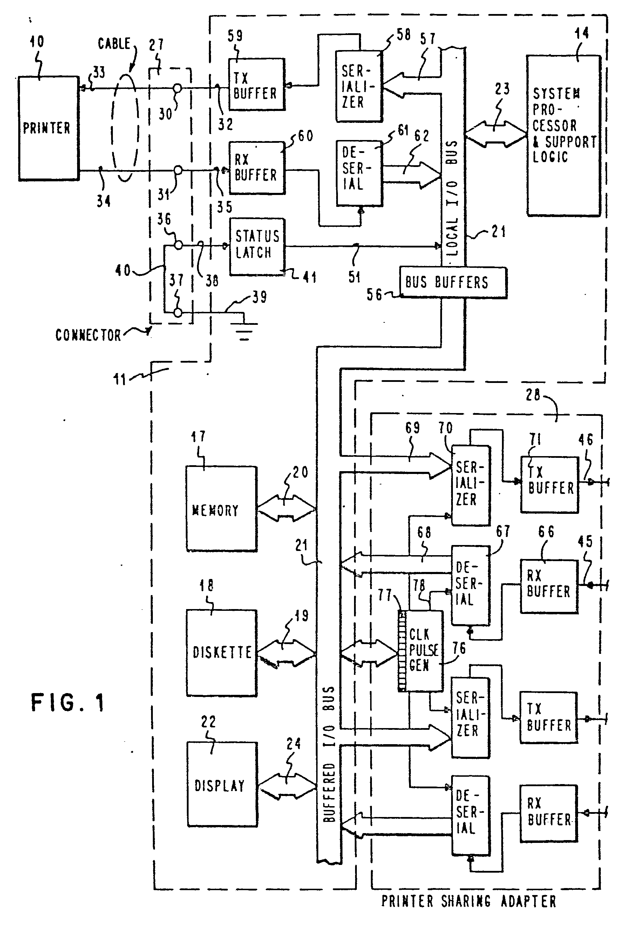

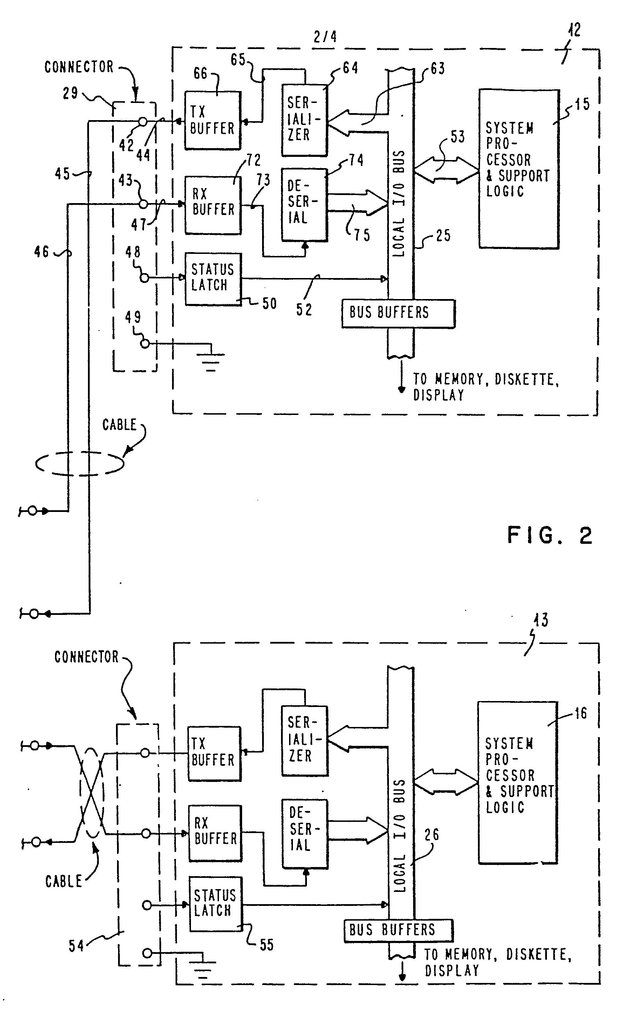

The logic for an embodiment of the present invention is shown in Figs. 1 and 2. The system comprises a printer 10 which is shared by three display unit work stations 11, 12 and 13. As will be hereinafter described in greater detail, the three display units are multiplexed so that display unit 11 is the primary display unit, i.e., all communications from secondary display units 12 and 13 with printer 10 must pass through the primary display unit 11 and the microprocessor 14 of the primary display unit functions to control all communications with the printer including the communications from secondary display units 12 and 13 are substantially identical in structure with primary display unit 11. Secondary display units 12 and 13 contain microprocessors 15 and 16 substantially the same as microprocessor 14. Primary display unit 11 contains an operational memory 17 which includes the operational program utilized by microprocessor 14 in controlling the multiplexing and other operations. This memory may conveniently be a convential 32K RAM memory. Similarly, secondary display units 12 and 13 contain such operational memories (not shown).

Primary work station 11 also contains a serial bulk storage memory 18, conveniently a diskette memory in which a wide variety of operational and control programs may be stored and selectively loaded into operational memory 17 via buses 19 and 20 communicating with main bus 21. Likewise, secondary display unit work stations 12 and 13 contain such diskette memories (not shown). Primary work station contains the standard display which may be found in any conventional word processing system work station. Display 22 is controlled by microprocessor 14 which issues and receives data from display 22 via buses 23 and 24 communicating through main bus 21. Standard text processing and formatting operations may be carried out using display unit 22 under control of microprocessor 14. Some typical work processing and formatting operations which may be carried out using the combination of display 22 and microprocessor 14 are described in detail in U.S. Patents 4,137,564, 4,126,893 and 4,138,719.

In a similar fashion microprocessors 15 and 16 in secondary work stations 12 and 13, respectively, communicate via main buses 25 and 26 with display element (not shown) to perform similar word processing operations.

It should be noted that in their word processing and formatting operations, secondary display unit work stations 12 and 13 operate substantially in the same manner as primary display unit work station 11. It is only in the communication and control of the printer 10 to produce the final hard copy of the data which has been formatted in the secondary display unit that secondary display unit work stations 12 and 13 do not directly communicate with printer 10 but rather communicate through primary display unit work station 11 in the manner to be hereinafter described in detail.

Display unit work stations 11, 12 and 13 are substantially identical, i.e., they are interchangeable. Any one of the three can be the primary display unit work station and the other two secondary display unit work stations. Each display unit work station has dormant or inactive capability to act as the primary work station. This dormant capability includes programs stored in its bulk or diskette memory 18. Microprocessors 14, 15 and 16 have the capability of determining whether the display unit work station has been selected to function as a primary or as a secondary work station and to activate appropriate logic and memory to permit the work station to function as a primary display unit work station if it has been so selected, or if it has been selected to be a secondary work station, to activate appropriate logic and memory to permit it to function as a secondary work station.

The determination is made as follows. Where a display unit work station such as display unit work station 11 is plugged directly into the printer and is to function as a primary display unit work station, it is connected with a connector 27. If the display unit is to function as a secondary display unit, it is connected to the printer sharing adapter unit 28 which will be described hereinafter in greater detail through connectors like connectors 29 and 54. With respect to direct connector 27, it is to be noted that in addition to terminals 30 and 31 which couple transmit lines 32 and 33 and receive lines 34 and 35, respectively, between primary display unit work station 11 and printer 10, terminal 36 and 37 which receive lines 38 and 39 from primary display unit work station 11 are shorted via line 40. This puts status latch 41 in primary work station at ground level. On the other hand, let us consider a connector such as connector 29 which is not directly connected to the printer 10 but rather in the case of secondary display unit station 12 connected to printer sharing adapter 28. Like connector 27, connector 29 has a pair of terminals 42 and 43, respectively connecting transmit lines 44 and 45 and receive lines 46 and 47. However, terminals 48 and 49 in connector 29 are not shorted to each other. Consequently, status latch 50 in secondary diplay work station 12 will not be at ground.

Accordingly, it is the condition of this status latch by which the display unit work station microprocessor determines whether the work station is to function as a primary or as a secondary work station. In this respect, let us consider primary work station 11. The condition of status latch 41 is transmitted to microprocessor 14 via line 51 communicating through main bus 21 and bus 23 to the microprocessor 14. When the status latch communicates to microprocessor 14 in the appropriate timing sequence (not shown) that it is at ground, microprocessor 14 communicates with diskette memory 18 and has loaded via main bus 21 into operational memory 17 the selected programs which will permit microprocessor 14 to control the functioning of display unit work station 11 as a primary work station. On the other hand with respect to secondary work station 12, at the appropriate time sequence, the condition that status latch 50 is not at ground is communicated via line 52 and main bus 25 and bus 53 to microprocessor 15. Microprocessor 15 thereby determines that status latch 50 is not at ground and consequently display unit work station 12 is to function as a secondary display unit work station. Accordingly, microprocessor 15 sends appropriate commands over main bus 25 to load programs from its associated diskette memory into its operational memory which will permit the operation of microprocessor 15 to control the operation of the display unit work station as a secondary work station.

In the same manner, since display unit work station 13 is to function as a secondary display unit work station, the condition of connector 54 produces a non-ground condition on status latch 55 and microprocessor 16 operates in the manner described above to set up and control the operation of display unit work station 13 as a secondary display unit work station.

Let us now describe how communications between the primary and secondary work station and the printer are carried out. First, with respect to communications between the primary work station directly with the printer. It should be noted that in the system being described the interface between the work station and the printer is a serial interface while inside of the work station, i.e., communications to and from the microprocessor and other units involve parallel interfacing buses. Consequently, information leaving the work station to the printer must be serialized and data from the printer back to the work station must be deserialized into its initial parallel form. Let us assume that the information in work station 11 has been formatted into its final form and we are ready to print the hard copy. Microprocessor 14 then has the final formatted information which has been stored in memory 17 loaded onto main bus 21 through buffer 56 for appropriate timing, and the data from main bus 21 is then loaded via bus 57 to serializer 58. Then, in serial form, the data are transmitted to buffer 59 where they await appropriate timing of clock signal (not shown) from microprocessor 14 to be transmitted over transmission lines 32 and 33 to the printer in serial form. Information back from the printer to the work station 11 is received in serial form over lines 34 and 35 in receive buffer 60 where again it awaits appropriate timing signals from the microprocessor 14 to be loaded into deserializer 61 then via bus 62 back to main bus 21 and to processor 14 in parallel form.

Now let us consider the operation of a secondary work station as exemplified by work station 12. When the formatting of the information has been completed and the information is now ready to be printed on the printer, the system microprocessor 15 like microprocessor 14 communicates with the memory and has the formatted information loaded on the main bus 25 from which it proceeds via bus 63 to serializer 64 where it is serialized and transmitted via line 65 to transmission buffer 66 and then on to transmission line 44 where it communicates through terminal 42 and connector 29 with line 45 of printer sharing adapter 28 where it is loaded into receive buffer 66 of the adapter. The adapter then operates under appropriate timing signals from a clock pulse generator 76 containing a counter 77 and means for generating pulses at a selected rate applied to deserializer on line 78 to load the information into deserializer 67 whereby information is deserialized and put into parallel form so that it may communicate over bus 68 to main bus 21 of primary work station 11.

Then, under the control of the microprocessor 14 of primary work station 11, the information at the appropriate timing is applied to serializer 58 and then to transmit buffer 59 from which it is tranmsmitted to the printer in the same manner previously described with respect to data originating in the primary work station 11. In a similar fashion, communications from the printer 10 back to secondary work station 12 are handled in the following manner through lines 34 and 35 to receive buffer 60 to deserializer 61 as previously described, onto main bus 21 and from bus 21 through bus 69 for the printer sharing adapter 28 to serializer 70 where the information is serialized. Then the data goes to transmit buffer 71 in printer sharing adapter 28 from which it is sent via line 46 back to receive buffer 72 of secondary work station 12. Then, the information is loaded over line 73 to deserializer 74, and then in parallel form on to bus 75 communicating with main bus 25 back to secondary work station microprocessor 15.

It may be readily observed that communication with printer 10 to and from secondary work station 13 is carried out in a similar manner through printer sharing adapter 28.

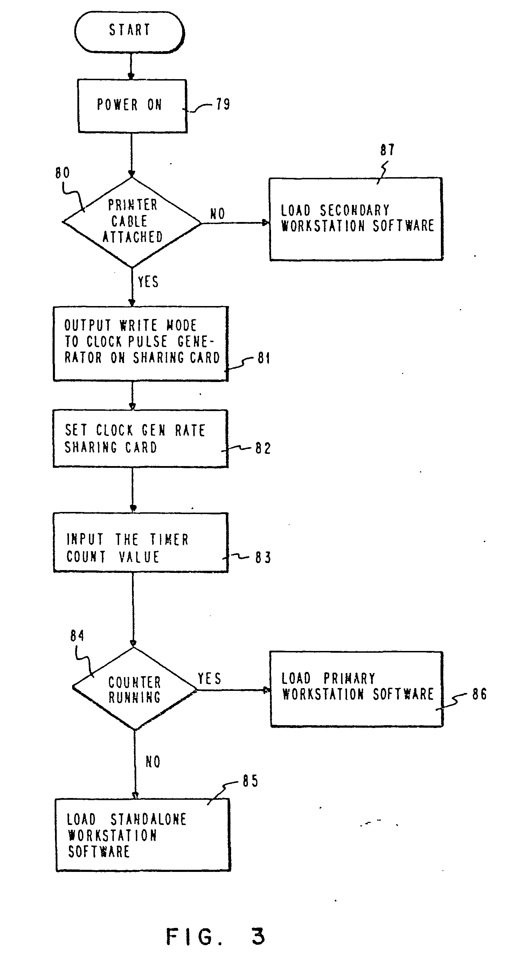

We have now described how the system functions in the multiplexing control of the processor in the primary work station, let us now consider some of the operations carried on by the system. With reference to the flow chart of Fig. 3, we will now describe the process through which each of the work stations will go during its initialization or "power on" routine in order to determine whether or not it is a primary or secondary work station and to accordingly activate its inactive logic and memory in order to selectively operate as a primary or secondary work station. After the start of the equipment, power is turned on, block 79. Then, a determination is made, block 80 as to whether or not the display unit work station is attached directly to the printer. As previously described in detail, this involves determining the condition of its status latch, i.e., latches 41, 50 or 55 in the respective work stations in Figs. 1 and 2. If the printer is not directly attached, then (block 87) selective programs are loaded into the work station operational memory which will control the microprocessor of the work station to operate the work station as a secondary work station. On the other hand, if the printer cable is attached, then we know that the work station is a primary work station or a stand-alone work station.

A determination has to be made as to whether it is a stand-alone work station or whether it is to control printer sharing with a plurality of secondary work stations, and the primary work station. This is determined by instituting a routine controlled by the microprocessor 14 of the primary work station which will determine whether there are secondary work stations and a printer sharing adapter attached to the work station. This routine involves the following steps. The microprocessor 14 of the primary work station communicates with the clock pulse generator 76 on printer sharing adapter 28 to set up appropriate timing for printer sharing. The clock pulse generator rate on the sharing card is set, block 82, and begins to operate. Then, block 83, the microprocessor 14 determines whether a count exists in counter 77 of clock pulse generator 76, i.e., (block 84) is the counter running? In other words, is there a clock pulse generator which has a counter? In effect, this determines whether or not a printer sharing adapter 28 is attached. If there is no printer sharing adapter attached, then there would be no counter and it would not be running. Consequently, block 85, microprocessor 14 will load appropriate software from diskette 18 into its memory 17 to permit its operation as a stand alone work station.

On the other hand, if it is determined that the counter is running, i.e., there is a counter, then, this would be an indication that there are secondary work stations and, block 86, software from diskette 18 would be loaded into operational memory 17 which would permit microprocessor 14 to operate work station 11 as a primary work station controlling the multiple communication of secondary work stations to printer 10.

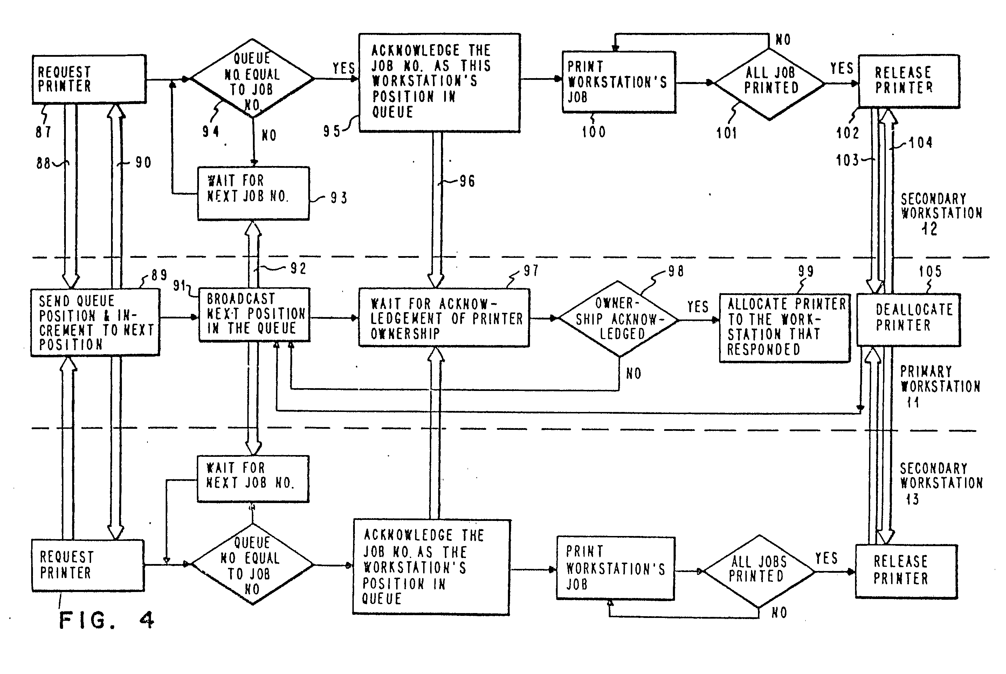

Now with respect to the flow chart of Fig. 4, we will describe a simple operation wherein the primary work station coordinates the job activity of all the work stations 11, 12 and 13. As you will note from the flow chart, process steps and channels of communications are substantially identical between each of the secondary work stations 12 and 13 and the primary work station 11. Therefore, in describing a typical job operation, we will describe the interaction between the primary work station 11 and secondary work station 12. The interaction between primary work station 11 and secondary work station 13 will be substantially identical. When the secondary work station requires the printer, it sends a request printer inquiry 87 over channel 88 to the primary work station 11. In response, the primary work station 11 sends a queue position, block 89, back to the secondary work station over channel 90 and increments to the next queue position. Having received its queue position, the secondary work station 12 waits for its turn in the following manner.

The primary work station continuously broadcasts the next positions in the queue as they are reached, block 91. This is communicated back to the secondary work station over channel 92. It should be noted the term "channels" indicate command flow. Actual communication is accomplished through the serializers/deserializers illustrated in Figs. 1 and 2. In the mean time, secondary work station waits for the receipt of each subsequent job number, block 93. When a job number arrives, secondary work station makes a determination as to whether its queue number is equivalent to the job number, decision block 94. If it is not, it cycles back to decision block 94 and continues to wait for the next job number. When the job number is equal the queue number, secondary work station acknowledges that the job number is this work stations position in the queue, block 95, back to the primary work station over channel 96. In the mean time, primary work station, block 97, is awaiting an acknowledgement of printer ownership, i.e., that the secondary work station's position in the queue has been reached. When this ownership is not acknowledged, decision block 98, primary work station loops back to block 91 and broadcasts the next position in the queue.

On the other hand, as in the present case, when such an acknowledgement is received by the primary work station, the printer is allocated to the work station that has responded, i.e., in the present case secondary work station 12, block 99. Having thus obtained control over the printer, the secondary work station 12 proceeds to carry out all of its jobs, block 100. Until all the jobs are completed as determined by decision block 101, the secondary work station retains control of the printer. Upon the completion of the jobs, secondary work station releases the printer, block 102, which is communicated back to the primary work station over channel 103. At this point, the primary work station acknowledges back to the secondary work station that is has released the printer over channel 104, and proceeds to deal- locate the printer, block 105, from the secondary work station. The primary work station then loops back to block 91 where the next position in the queue is again repetitively broadcast, and the process is continued until the next broadcast position coincides with a queue position of one of the work stations or the queue is empty.

It should be noted that the queueing procedure described above involving the coaction of the primary and secondary work station is also carried out in the primary work station when all jobs and sub-tasks involve only the primary work station.

While the invention has been particularly shown and described with reference to a preferred embodiment it will be understood by those skilled in the art that various other changes in form and detail may be made without departing from the scope of the claims.

**Claims**

1. A word processing system comprising a printer (10) and a plurality if display units (11, 12, 13) each having a text formatting processor (14, 15, 16) and means for controlling said printer; said system being characterized in that:

each display unit comprises means for detecting whether the printer is directly connected to said display unit and to cause same to operate as a primary display unit (11) in the presence of a direct printer connection and as a secondary display unit (12, 13) in the absence thereof, first connecting means (27) being associated with the display unit operating as primary display unit for directly connecting same to said printer, and

each display unit further comprises control means for controlling the sharing of said printer, said control means being normally inactive but being activated when the display unit in question is the primary display unit and is connected to one or more secondary display units, sharing connecting means (28, 29, 54) being provided for connecting said primary diplay unit to said secondary display units

whereby each display unit is capable of operating as a primary display unit through which the secondary display units are multiplexed and communicate with said printer.

2. The system according to claim 1 wherein said sharing connecting means comprise:

second connecting means (29, 54) associated with each of said secondary display units (12, 13) and

printer sharing adapter (28) interconnected between said primary display unit (11) and said secondary display units by means of said second connecting means for enabling each of these units to communicate with said printer (10).

3. The system according to claim 2 wherein each of said plurality of display units comprises status means (41, 50, 55) able to take two states, said status means being in a first state when the display unit is the primary display unit (11) and in a second state when the display unit is a secondary display unit.

4. The system according to claim 2 or 3 wherein the control means in said primary display unit (11) are included in said text formatting processor (14).

5. System according to any one of claims 2, 3 or 4 wherein each of said plurality of display units further includes:

normally inactive communication means for controlling the communication of said display unit with said printer, as a secondary display unit (12, 13) through said printer sharing adapter means (28),

and means responsive to the selective connection of said display unit as a secondary unit for activating said communication means.

6. The system according to claim 5 wherein said communication means in each display unit (11, 12, 13) is included in the text formatting processor (14, 15, 16) of said unit.

7. System according to any one of claims 2 to 6 wherein said printer sharing adapter means (28) comprise buffers (66, 71) used for the transfer of the information between each of said secondary display units (12, 13) and said printer (10) and a clock pulse generator (76) providing timing signals for controlling said transfer of information.

## Patentansprüche

1. Wortverarbeitungssystem mit einem Drucker (10) und mehreren Anzeigeeinheiten (11, 12, 13), wobei jede Einheit mit einem Textformatstruerung-Prozessor versehen ist (14, 15, 16), und Mittel zur Steuerung des Druckers, dadurch gekennzeichnet, dass

jede Anzeigeeinheit Mittel zur Ermittlung aufweist, ob der Drucker direkt mit der Anzeigeeinheit verbunden ist, wo diese Ermittlungsmittel die Anzeigeeinheit befaehigen, bei einem direkten Druckeranschluss als eine Hauptanzeigeeinheit (11) und sonst als eine sekundaere Anzigeeinheit (12, 13) betrieben zu werden, wobei erste Verbindungsmittel (27) der als Haupteinheit betreibbaren Anzeigeeinheit so zugeordnet sind, dass sie diese Anzeigeeinheit direkt mit dem Drucker verbinden, und

jede Anzeigeeinheit weiterhin Steuermittel zur Steuerung der mehrfachen Verbindung des Druckers aufweist, wobei diese Steuermittel ueblicherweise inaktiv sind, jedoch aktiv werden, wenn die genannte Anzeigeeinheit die Haupteinheit ist und dabei mit einer oder mehreren weiteren sekundaeren Einheiten verbunden ist, indem die Mehrfachbenutzung von den Verbindungsmitteln (28, 29, 54) zur Verbindung der Hauptanzeigeeinheit mit den sekundaeren Einheiten vorgesehen ist,

wobei jede Einzeigeeinheit als eine Haupteinheit betreibbar ist, wodurch die sekundaeren Anzeigeeinheiten multiplext sind und so Informationen mit dem Drucker austauschen koennen.

2. Wortverarbeitungssystem gemaess Anspruch 1, in dem die mehrfach benutzte Verbindungsmittel aufweisen:

zweite Verbindungsmittel (29, 54), die den jeweiligen sekundaeren Anzeigeeinheiten (12, 13) zugeordnet sind, und

Anschluss (28) fuer mehrfache Benutzung des Druckers, der zwischen der Haupteinheit (11) und den sekundaeren Einheiten mittels der zweiten Verbindungsmittel verbunden ist, so dass dieser Anschluss befaehigt, jede dieser Anzeigeeinheiten mit dem Drucker (10) Informationen auszutauschen.

3. Wortverarbeitungssystem gemaess Anspruch 2, in dem jede Anzeigeeinheit Satusmittel (41, 50, 55) aufweist, die zwei verschiedene Zustaende aufnehmen koennen, wobei die Statusmittel in einem ersten Zustand, wenn die Anzeigeeinheit die Haupteinheit (11) ist, und in einem zweiten Zustand sich befinden, wenn die Anzeigeeinheit eine sekundaere Einheit ist.

4. Wortverarbeitungssystem nach Anspruch 2 oder 3, in dem die Steuermittel fuer sie Haupteinheit (11) in dem Textformatsteuerung-Prozessor (14) vorgesehen sind.

5. Wortverarbeitungssystem nach einem der Ansprüche 2, 3 oder 4, in dem jede Anzeigeeinheit weiterhin aufweist:

ueblich inaktive Informationsaustausch-Mittel zur Steuerung des Informationsaustausches zwischen dieser Anzeigeeinheit und dem Drucker, wo diese Anzeigeeinheit als sekundaere Einheit (12, 13) durch den Anschluss fuer die mehrfache Benutzung des Druckers (28) betrieben ist, und

Mittel zur Aktivierung der Informationsaustausch-Mittel, wo diese Mittel auf die selecktive Verbindung der Anzeigeeinheit ansprechen, die als eine sekundaere Einheit betrieben ist,

6. Wortverarbeitungssystem gemaess Anspruch 5, in dem bei jeder Anzeigeeinheit (11, 12, 13) die Informationsaustausch-Mittel in dem Textformatsteuerung-Prozessor (14, 15, 16) der jeweiligen Anzeigeeinheit vorliegen.

7. Wortverarbeitungssystem gemaess Anspruch 2 bis 6, in dem die Anschlussmittel fuer die mehrfache Benutzung des Druckers (28) Pufferspeicher (66, 71) aufweisen, die die Uebertragung der Informationen zwischen jeder sekundaeren Einheit (12, 13), dem Drucker (10) und einem Taktpulsgenerator (76) ermoeglicht, der Taktsignale zur Steuerung der Informationsuebertragung erzeugt.

## Revendications

1. Système de traitement de mot comprenant une imprimante (10) et plusieurs unités d'affichages (11, 12, 13) ayant chacune un processeur de mise en forme de texte (14, 15, 16) et des moyens pour commander ladite imprimante, ledit syetème étant caractérisé en ce que:

chaque unité d'affichage comprend des moyens pour détecter si l'imprimante est directement connectée à ladite unité d'affichage pour la faire fonctionner en tant d'unité d'affichage principale (11) en présence d'une connexion directe à l'imprimante et en tant qu'unité d'affichage secondaire (12, 13) en l'absence de celle-ci, des premiers moyens de connexion (27) étant associés à l'unité d'affichage fonctionnant en tant qu'unité d'affichage principale pour connecter directement celle-ci à ladite imprimante, et

chaque unité d'affichage comprend, en outre, des moyens de contrôle pour commander le partage de ladite imprimante, lesdits moyens de contrôle étant normalement inactifs mais étant actionnés lorsque l'unité d'affichage en question est l'unité d'affichage principale et qu'elle est connectée à une ou plusieurs unités d'affichage secondaires, le partage des moyens de connexion (28, 29, 54) se faisant pour connecter ladite unité d'affichage principale auxdites unités d'affichage secondaires,

afin que chaque unité d'affichage puisse fonctionner en tant qu'unité d'affichage principale à laquelle sont multiplexées les unités d'affichage secondaires pour communiquer avec ladite imprimante.

2. Système selon la revendication I, dans lequel le partage des moyens de connexion comporte:

de seconds moyens de connexion (29, 54) associés à chacune desdites unités d'auffichage secondaires (12,13) et

un adaptateur de partage d'imprimante (28) interconnecté entre ladite unité d'affichage principale (11) et lesdites unités d'affichage secondaires au moyens desdits seconds moyens de connexion pour permettre à chacune de ces unités de communiquer avec ladite imprimante (10).

3. Système selon la revendication 2, dans lequel chacune des unités d'affichage comprend des moyens d'état (41, 50, 55) pouvant assumer deux états, lesdits moyens d'état étant dans un premier état lorsque l'unité d'affichage est l'unité d'affichage principale (11) et dans un second état lorsque l'unité d'affichage est une unité d'affichage secondaire.

4. Système selon la revendication 2 ou 3, dans lequel les moyens de contrôle dans ladite unité d'affichage primaire (11) sont inclus dans ledit processeur de mise en forme de texte (14).

5. Système selon l'une quelconque des revendications 2, 3 ou 4, dans lequel chacune desdites unités d'affichage comprend, en outre:

des moyens de communication normalement inactifs pour commander la communication de ladite unité d'affichage avec ladite imprimante en tant qu'unité d'affichage secondaire (12, 13) via lesdits moyens adaptateurs de partage d'imprimante (28),

et des moyens sensibles à la connexion sélective de ladite unité d'affichage en tant qu'unité d'affichage secondaire pour actionner lesdits moyens de communication.

6. Système selon la revendication 5, dans lequel lesdits moyens de communication dans chaque unité d'affichage (11, 12, 13) est inclus dans le processeur de mise en forme de texte (14, 15, 16) de ladite unité.

7. Système selon l'une quelconque des revendications 2 à 6, dans lequel lesdits moyens adaptateurs de partage d'imprimante (28) comprennent des dispositifs tampon (66, 71) utilisés pour le transfert des informations entre chacune desdites unités d'affichage secondaires (12, 13) et ladite imprimante (10), et un générateur d'impulsions d'horloge (76) fournissant des signaux de synchronisation pour commander ledit transfert d'information.

FIG. 1

PRINTER SHARING ADAPTER

FIG. 2

FIG. 3

0 061 571

REQUEST PRINTER

87

88

90

QUEUE NO EQUAL TO JOB NO.

94

NO

YES

WAIT FOR NEXT JOB NO.

93

ACKNOWLEDGE THE JOB NO. AS THIS WORKSTATION'S POSITION IN QUEUE

95

96

PRINT WORKSTATION'S JOB

100

ALL JOB PRINTED

NO

YES

101

RELEASE PRINTER

102

103

104

SECONDARY WORKSTATION 12

SEND QUEUE POSITION & INCREMENT TO NEXT POSITION

89

91

BROADCAST NEXT POSITION IN THE QUEUE

92

WAIT FOR ACKNOWLEDGEMENT OF PRINTER OWNERSHIP

97

OWNERSHIP ACKNOWLEDGED

98

YES

NO

ALLOCATE PRINTER TO THE WORKSTATION THAT RESPONDED

99

DEALLOCATE PRINTER

105

PRIMARY WORKSTATION 11

WAIT FOR NEXT JOB NO.

SECONDARY WORKSTATION 13

REQUEST PRINTER

QUEUE NO EQUAL TO JOB NO

NO

ACKNOWLEDGE THE JOB NO. AS THE WORKSTATION'S POSITION IN QUEUE

PRINT WORKSTATION'S JOB

NO

ALL JOBS PRINTED

YES

RELEASE PRINTER

FIG. 4

4